# EUROPEAN PATENT APPLICATION

(11) **EP 4 687 239 A1**
(43) Date of publication of application: **04.02.2026**
(21) Application number: 25189244.4
(22) Date of filing: 14.07.2025
(51) Int. Cl.: H02G 3/32, F16L 3/10, H02G 3/00

(54) **CABLE MANAGEMENT SYSTEM**

(30) Priority: 02.08.2024 US 202418792811
(71) Applicant: Panduit Corp., Tinley Park, Illinois 60487 (US)
(72) Inventor: Sylvester, David J., Tinley Park (US); Rouleau, Rodney G., Tinley Park (US)
(74) Representative: Roberts, Gwilym Vaughan

(57) **Abstract**

A cable management system designed to support cables in solar applications. The cable management system includes a U-shaped bracket and at least one clamp half. The U-shaped bracket has a base with two arms with each arm including a securement slot. The clamp half has a top, a bottom, a front, a back, and sides with button pads extending from the sides. The clamp half is installed within the U-shaped bracket such that the button pads slide in the securement slots to position the clamp half in the U-shaped bracket. The clamp half separates and supports the cables installed in the U-shaped bracket.

## Description

### Cross Reference to Related Application(s)

This application is a continuation in part of U.S. Patent Application No. 18/651,879 filed May 1, 2024, which is a continuation of U.S. Patent Application No. 17/950,565, filed September 22, 2022.

### Field

The present disclosure relates to a cable management system, and more particularly to a messenger wire cable management system for solar applications.

### Background

The use of solar panels for electrical power generation is a rapidly growing sustainable energy source. Each solar panel requires an electrical connection to collect the electric energy for use, storage, or connection to a power grid. The electrical energy produced by a single panel does not require large conductors but as the panels are connected to each other the conductor size must be increased to accommodate the amount of current being produced by the panels and carried by the conductor. Thus, large solar farms can produce a large amount of energy that requires large cables to carry the current. The cables are often suspended and routed with brackets hung from messenger wires. The number of cables in each bracket will vary but some installations might require 20 or more cables per bracket. If the cables are laying next to each other in the bracket, the current limit of the cables will be required to be derated. Free air space and derating of cables are defined in National Electric Code, NEC 100 and NEC 310, respectively. The free air space reduces the need to derate the current carrying limit of conductors. Thus, maintaining cable separation in the bracket will reduce or eliminate the derating factor for the cables. As a result, there is a need for an improved bracket that securely holds and separates the cables, that can be easily installed, and that includes minimum components.

### Summary

A cable management system that supports cables in solar applications. The cable management system includes a U-shaped bracket and at least one clamp half positioned within the U-shaped bracket. The U-shaped bracket has a base with two arms with each arm including a securement slot. The clamp half has a top, a bottom, a front, a back, and sides with button pads extending from the sides. The button pads slide in the securement slots to position the clamp half within the U-shaped bracket. The clamp half separates and supports the cables installed in the U-shaped bracket.

### Brief Description of the Drawings

FIG. 1 is a perspective view of a partially assembled cable management system of the present disclosure.
FIG. 2 is a perspective view of the U-shaped bracket of the cable management system of FIG. 1.
FIG. 3 is a perspective view of a clamp half of the cable management system of FIG. 1.
FIG. 4 is a perspective view of the partially assembled cable management system of FIG. 1 with a plurality of cables positioned on the clamp half.
FIG. 5 is a perspective view of the cable management system of FIG. 4 with a top clamp half positioned in the U-shaped bracket and secured to the bottom clamp half to from a cable clamp.
FIG. 6 is a perspective view of the cable management system of FIG. 5 with a second cable clamp and cables positioned within the bracket.
FIG. 7 is a perspective view of an alternative cable management system.
FIG. 8 is a perspective view of the U-shaped backet of the cable management system of FIG. 7.
FIG. 9 is a perspective view of the closure bracket of the cable management system of FIG. 7.
FIG. 10 is a perspective view of one end of the closure bracket secured to the U-shaped bracket of the cable management system of FIG. 7.
FIG. 11 is a perspective view of the cable clamp assembly installed in the U-shaped bracket of the cable management system of FIG. 7.
FIG. 12 is a top perspective view of a bottom cable clamp half of the cable clamp assembly of FIG. 11.
FIG. 13 is a bottom perspective view of the cable clamp half of the cable clamp assembly of FIG. 11.
FIG. 14 is an exploded view of the cable clamp assembly of FIG. 11.
FIG. 15 is a perspective view of a cushion insert installed in the cable clamp assembly of FIG. 14.
FIG. 16A is a bottom perspective view of the cable spacer installed in the cable management system of FIG. 7.
FIG. 16B is a top perspective view of the cable spacer installed in the cable management system of FIG. 7.
FIG. 17 is a perspective view of the U-shaped bracket of the cable management system of FIG. 7 positioned on messenger wires.
FIG. 18 is a perspective view of the U-shaped bracket positioned on messenger wires of FIG. 17 with bottom cable clamp halves partially installed adjacent each other on the U-shaped bracket.
FIG. 19 is a perspective view of the U-shaped bracket positioned on messenger wires of FIG. 18 with bottom cable clamp halves installed adjacent each other on the U-shaped bracket.
FIG. 20 is a perspective view of the U-shaped bracket positioned on messenger wires with bottom cable clamp halves installed on the U-shaped bracket of FIG. 19 with cables positioned in the bottom cable clamp halves.
FIG. 21 is a perspective view of the U-shaped bracket positioned on messenger wires with bottom cable clamp halves and cables installed on the U-shaped bracket of FIG. 20 with top cable clamp halves positioned over the cables.
FIG. 22 is a perspective view of the U-shaped bracket positioned on messenger wires with cable clamp assemblies and cables installed on the U-shaped bracket of FIG. 21 with a closure bracket installed on top of the cable clamp assemblies.
FIG. 23 is a perspective view of the cable management system of FIG. 7 installed on messenger wires and with a plurality of cables routed in the cable clamp assemblies.
FIG. 24 is a perspective view of the cable management system of FIG. 23 and a second aligned cable management system routing cables.

### Detailed Description

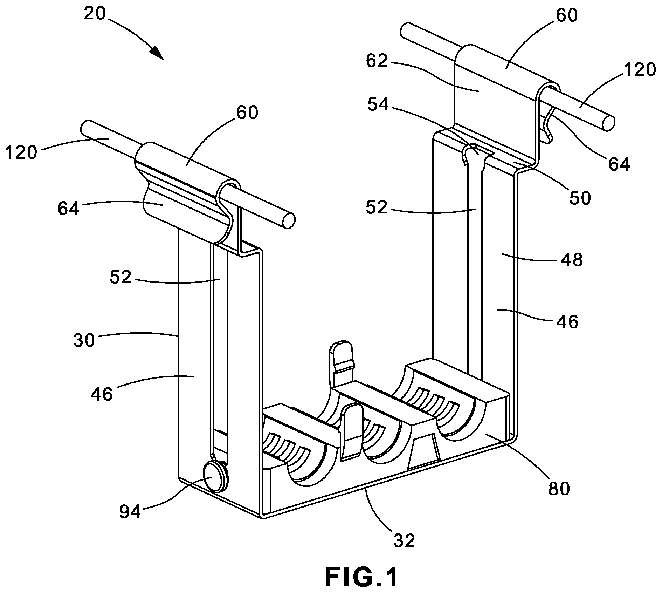

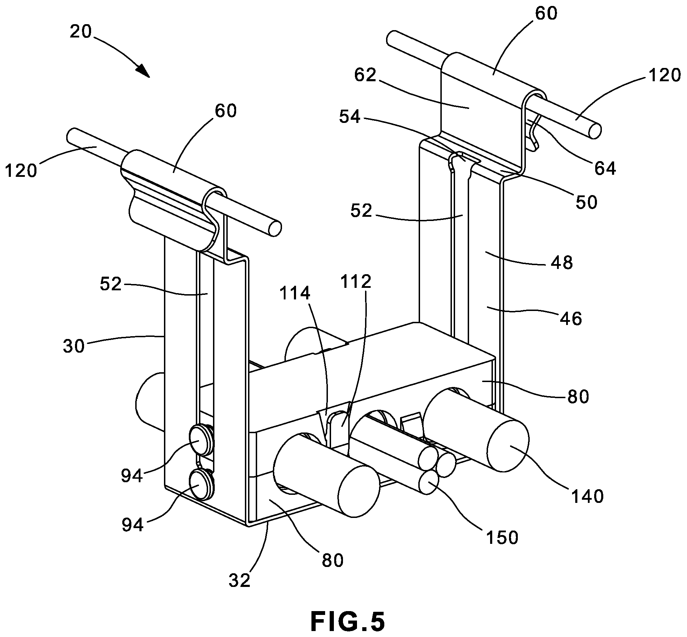

The present disclosure is directed to a cable management system 20 for solar applications. The cable management system includes a U-shaped bracket 30 and a plurality of clamp halves 80 that form cable clamps (see FIGS. 5-6). The U-shaped bracket 30 provides a stable and secure platform for the polymer cable clamps. FIG. 1 illustrates the U-shaped bracket 30 with one clamp half 80 positioned therein.

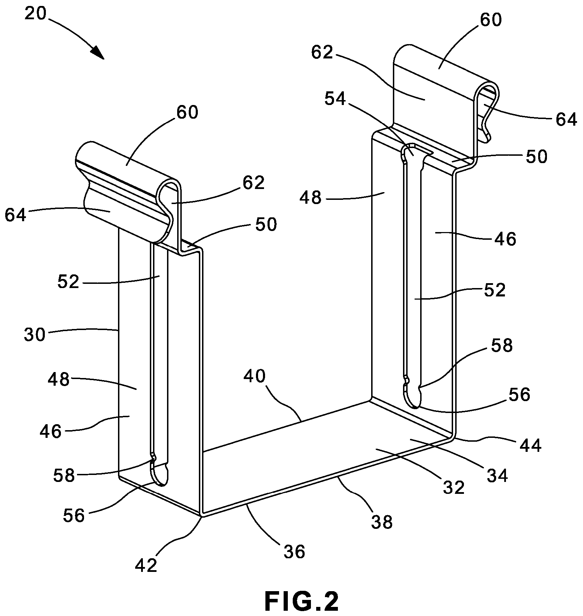

As illustrated in FIG. 2, the U-shaped bracket 30 includes a base 32 with a top 34, a bottom 36, a front 38, a back 40, a first side 42, and a second side 44. Arms 46 extend from the first side 42 and the second side 44 of the base 32. The arms 46 include a vertical member 48 that extends to a horizontal member 50. Each arm 46 includes a securement slot 52 located in the center of the arm 46. The securement slots 52 include an enlarged entrance end 54 located in the horizontal member 50. The entrance end 54 allows for loading of the clamp half 80 in the bracket 30 without manipulating the bracket 30. Each securement slot 52 extends from the entrance end 54 in the horizontal member 50, down the center of the vertical member 48, to a circular bottom 56 with locking tabs 58 in the vertical members 48 of each arm 46.

Messenger wire latches 60 are located at the distal end of the horizontal member 50 of the arms 46. The messenger wire latches 60 secure messenger wires 120 for the solar application. The messenger wire latches 60 include a vertical member 62 connected to a spring hook 64. The messenger wire latches 60 provide range taking capabilities when receiving various diameter messenger wires 120. The messenger wire latches 60 provide easy attachment and reduce the amount of part numbers required for the cable management system.

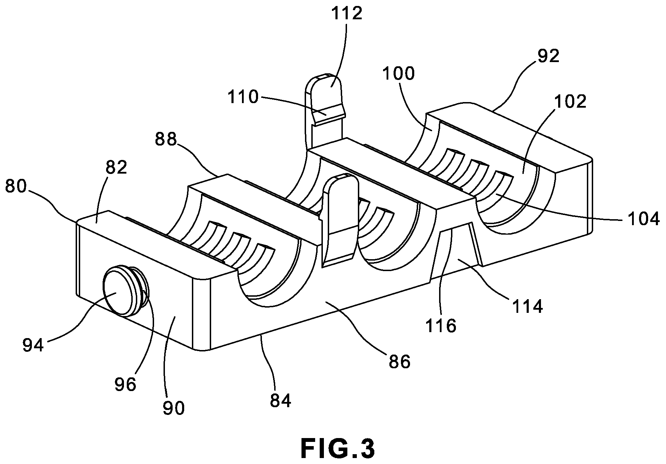

As illustrated in FIG. 3, the clamp half 80 includes a top 82, a bottom 84, a front 86, a back 88, a first side 90 and a second side 92. Each side 90, 92 of the clamp half 80 includes a button pad 94 that extends from a center of each side 90, 92 via a shaft 96.

The top 82 of the clamp half 80 includes a plurality of saddles 100. The saddles 100 are semi-circular and include a cushion insert 102. The cushion inserts 102 have flexible ribs 104 that enable the use of multiple cables or a single cable with different diameters to be positioned in each of the saddles 100 within a single clamp half 80. The flexible ribs 104 securely hold the various cable sizes while preventing the cables from being damaged. The cushion inserts 102 can be either a separate molded component this is inserted manually into the clamp half 80 or the cushion inserts 102 can be manufactured with the clamp half 80 by an over molding process.

The front 86 and the back 88 of the clamp halves 80 include releasable latches 110 with thumb tabs 112. The front 86 and back 88 of the clamp halves 80 also include a notch 114 or opening with a ledge 116. The releasable latch 110 extending from the front 86 of the clamp half 80 is aligned with the notch 114 and ledge 116 in the back 88 of the clamp half 80 and the releasable latch 110 extending from the back 88 of the clamp half 80 is aligned with the notch 114 and ledge in the front 86 of the clamp half 80. As illustrated in FIGS. 5-6, two clamp halves 80 are snaped together via the releasable latch 110 engaging the ledge 116 defined by the notch 114 to create a cable clamp assembly.

Once the two messenger wires 120 are installed for the solar application (not illustrated), the U-shaped bracket 30 is snapped onto the messenger wires 120. A clamp half 80 is inserted in the U-shaped bracket 30 with the bottom 84 of the clamp half 80 positioned to be placed on the base 32 of the U-shaped bracket 30 and the saddles 100 of the clamp half 80 facing upwards. The button pads 94 extending from the sides 90, 92 of the clamp half 80 are inserted in the entrance end 54 of the securement slots 52 of the U-shaped bracket 30. The clamp half 80 is slid towards the base 32 of the U-shaped bracket 30 via the button pads 94 in the securement slot 52. As illustrated in FIG. 1, the clamp half 80 is locked in place in the U-shaped bracket 30 once the button pads 94 pass the locking tabs 58 of the securement slot 52. The button pads 94 are positioned at the circular bottom 56 of the securement slot 52. The securement slot 52 also maintains the alignment of clamp halves 80 when multiple clamp halves are installed in the U-shaped bracket.

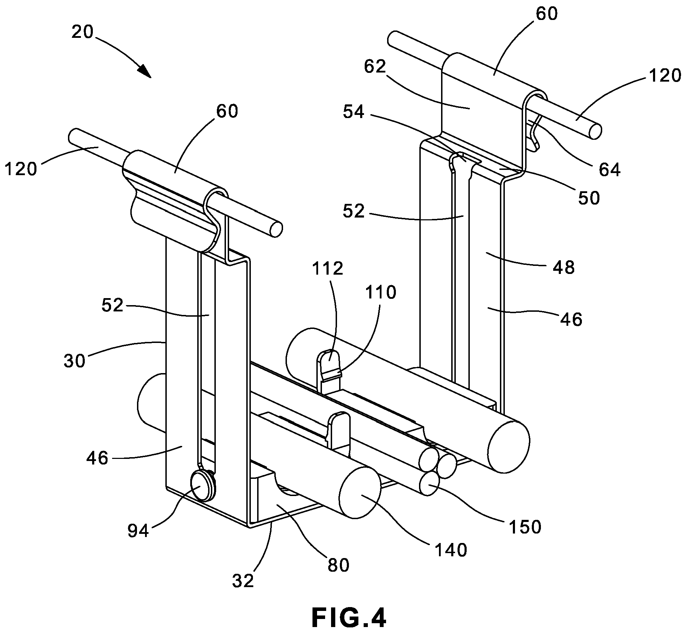

As illustrated in FIG. 4, a first layer of cables 140, 150 is loaded onto the clamp half 80. Once the layer of cables 140, 150 has been loaded, a second clamp half 80 is installed in the U-shaped bracket 30. As illustrated in FIG. 5, the second or top clamp half 80 is installed with the saddles 100 facing downwards. The two clamp halves 80 are snapped together via the releasable latches 110 engaging the ledge 116 defined by notches 114 to create a cable clamp assembly. If cables need to be added or removed, the releasable latches 110 can be pulled open by using the thumb tab 112 for fast and easy removal. The installer can unlock the cable halves 80 by pushing the thumb tab 112 inward and pulling the cable clamp assembly apart.

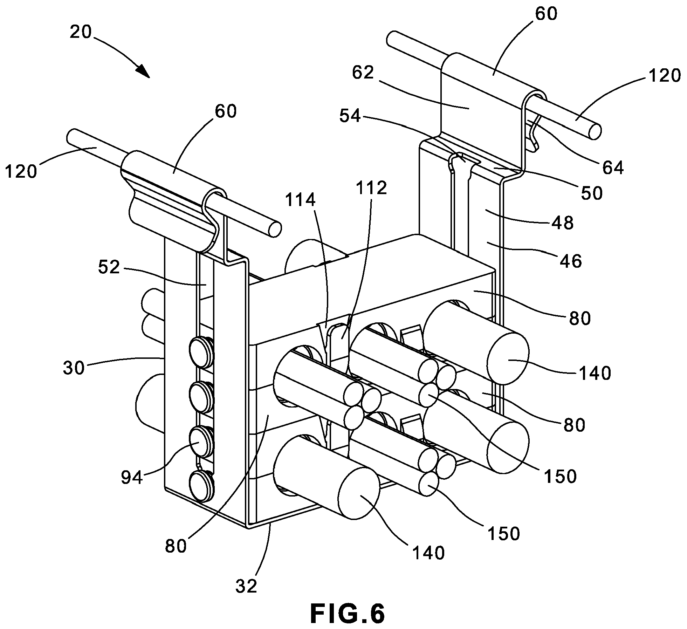

Cable clamp assembly layers are added to the U-shaped bracket 30, as needed, using the same installation steps described above. For example, as illustrated in FIG 6, a second cable clamp assembly with cables has been installed in the U-shaped bracket.

The cable management system of the present disclosure provides a bracket with securement slots that facilitate the ease of assembly and the loading of the clamp halves. The clamp halves of the present disclosure ensure cable separation that maintains cable free air space. The cable management system of the present disclosure provides an improved system with minimum components for supporting cables in solar applications.

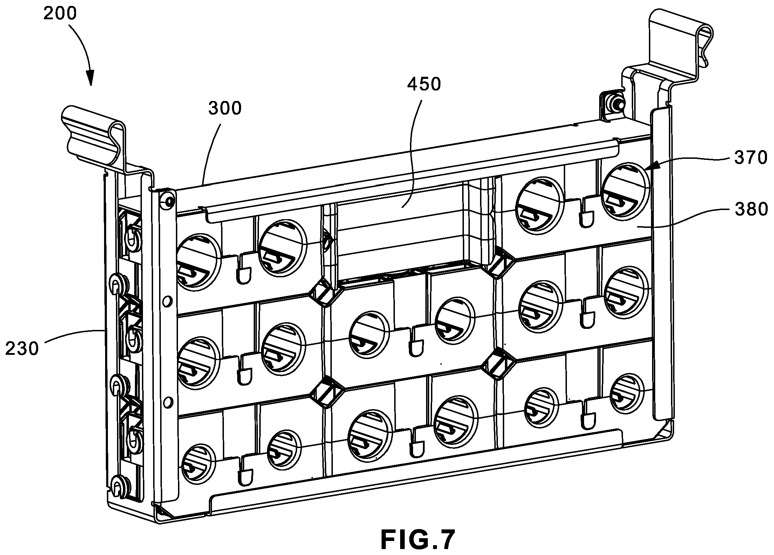

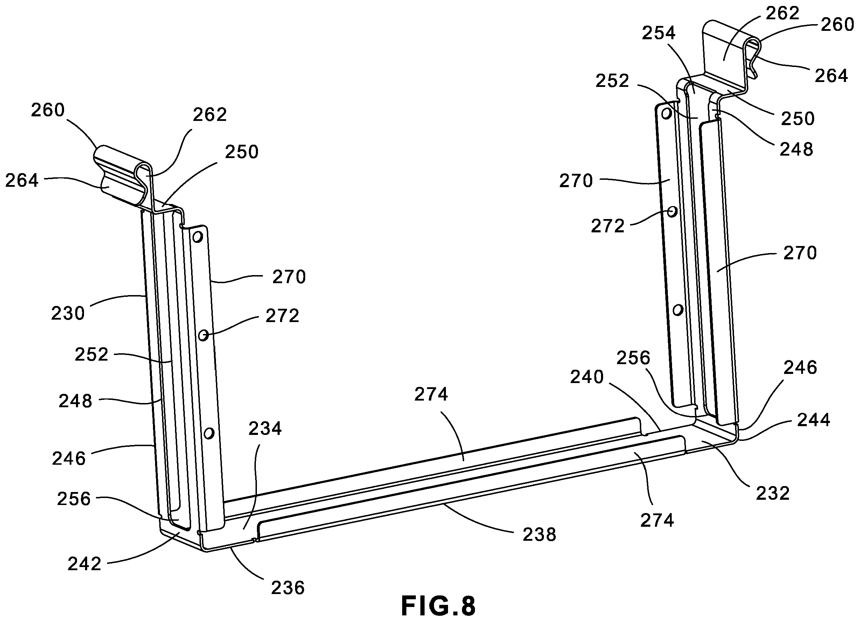

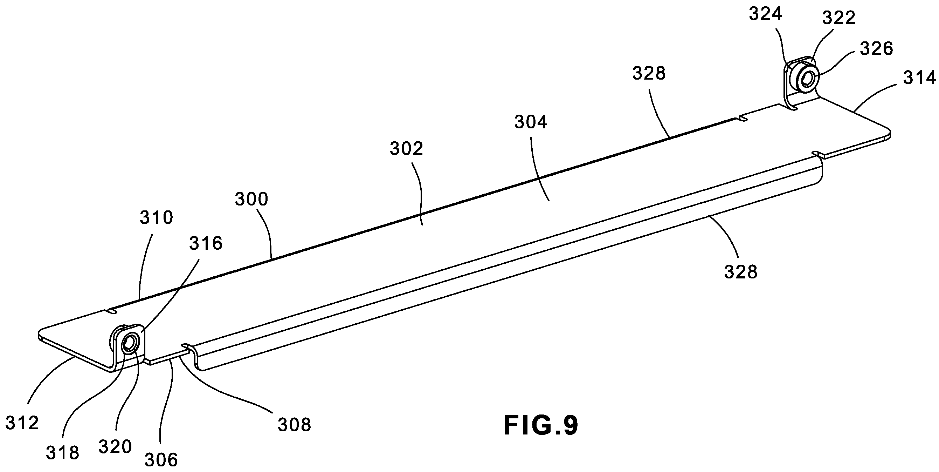

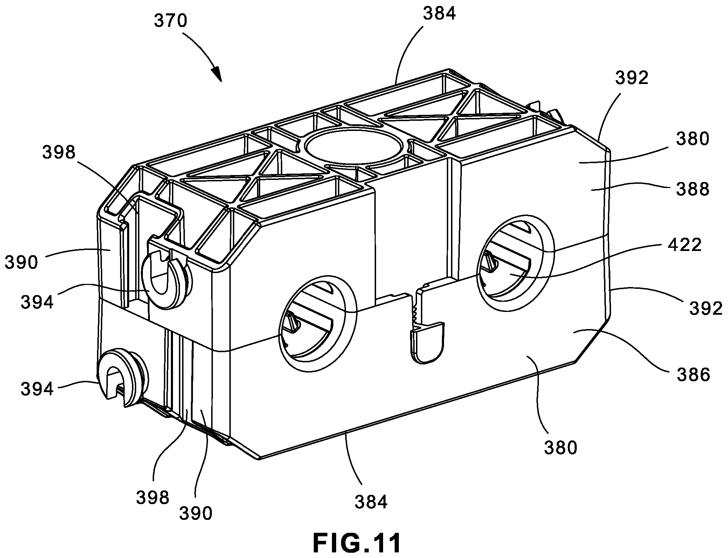

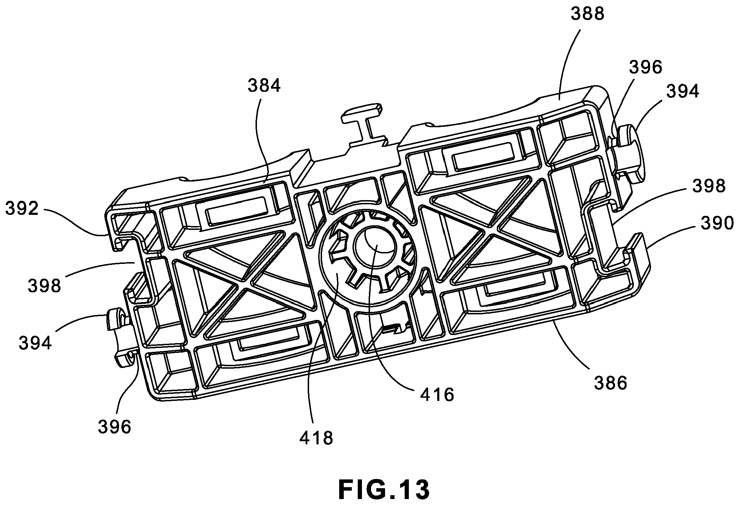

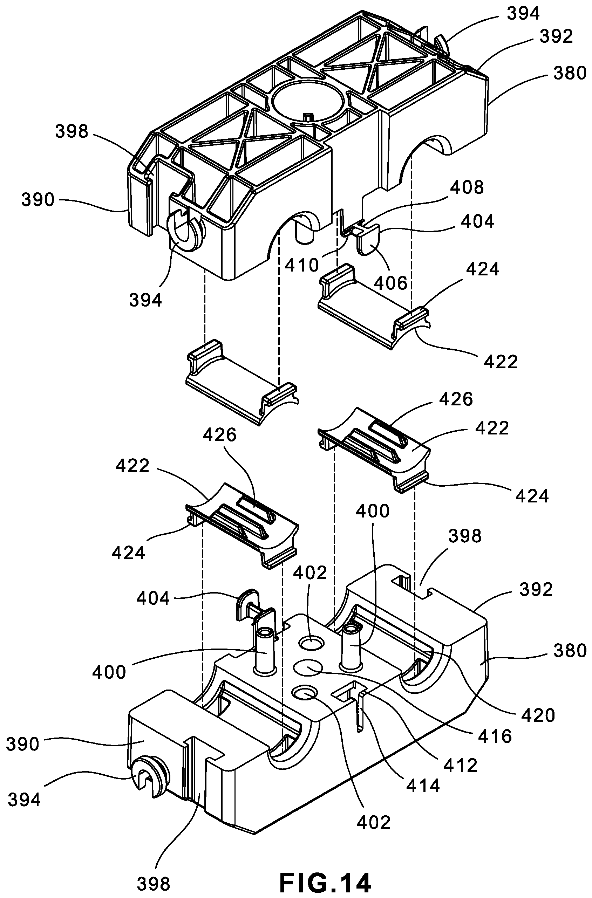

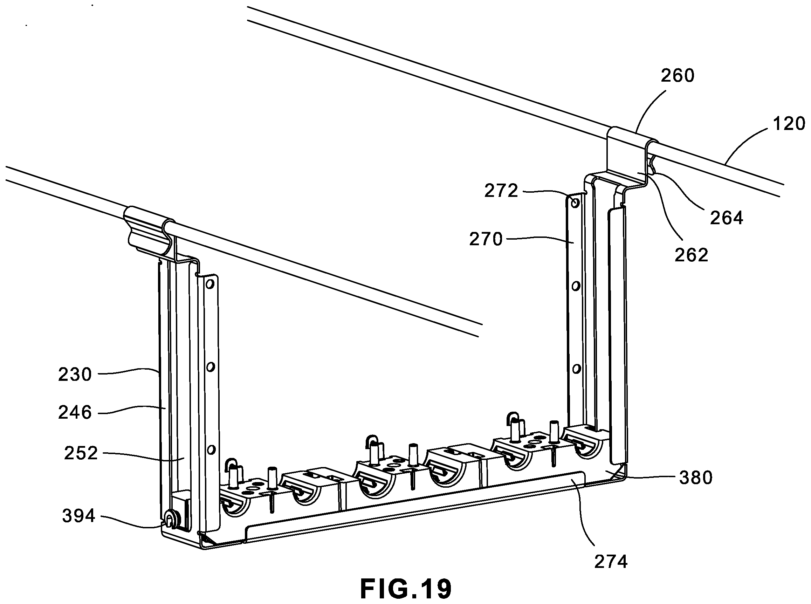

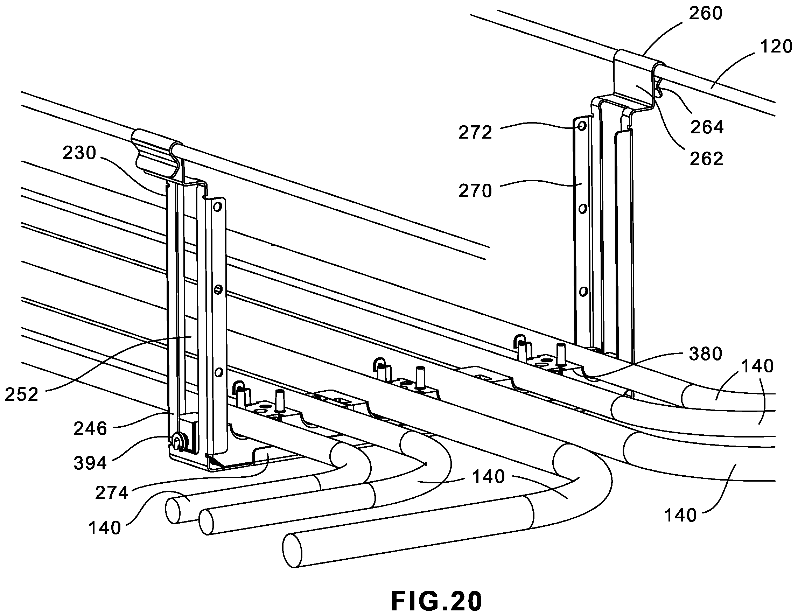

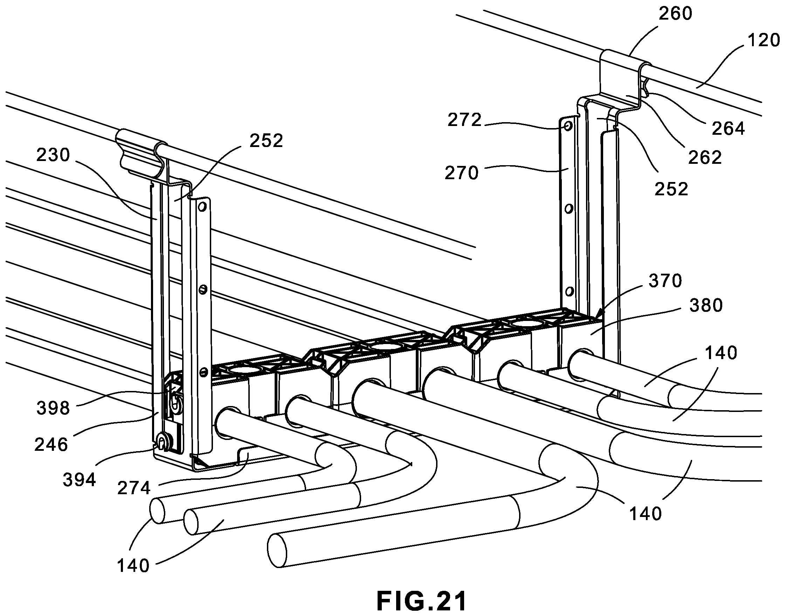

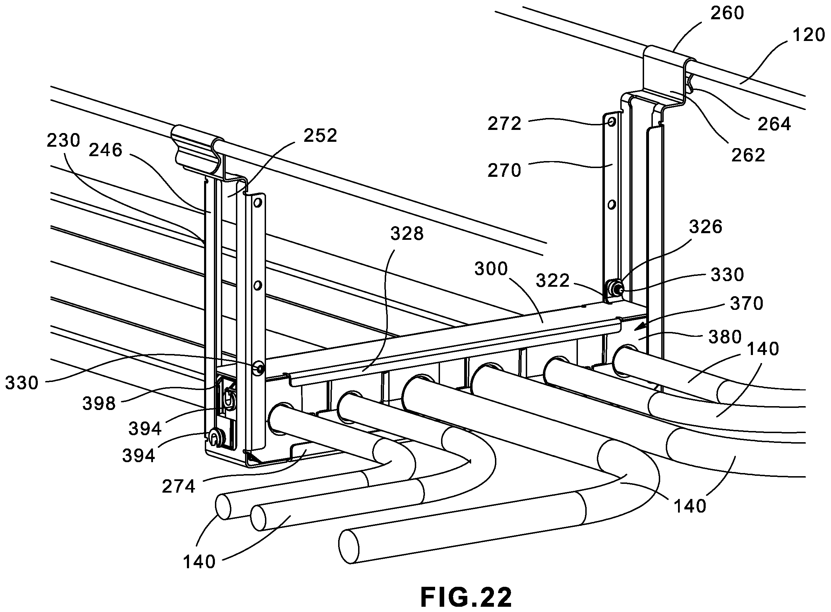

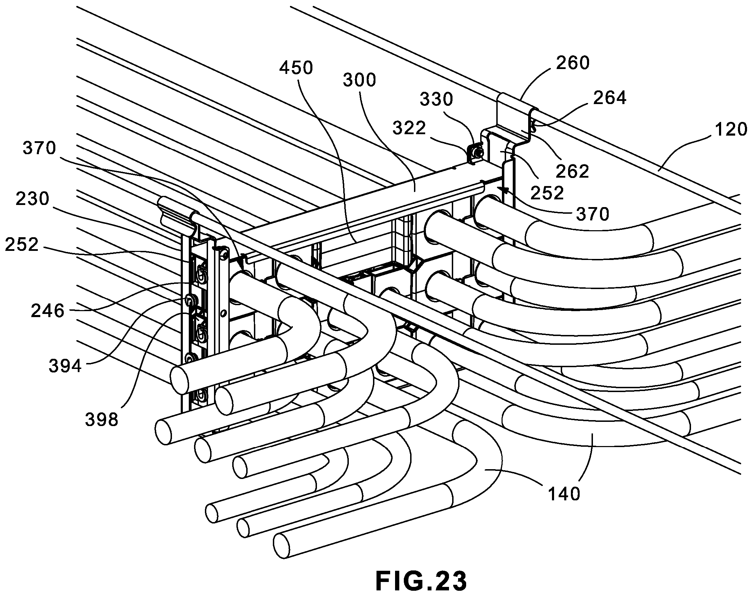

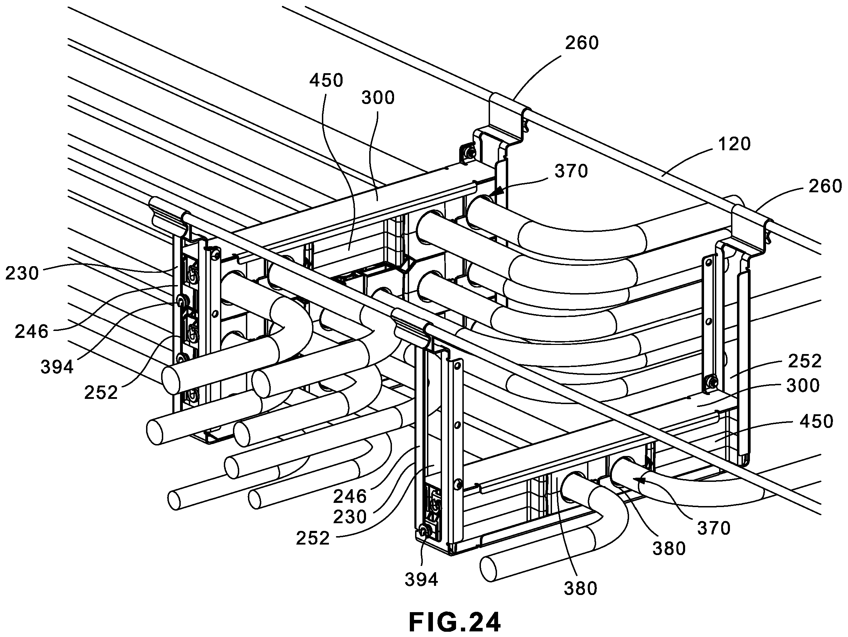

FIGS. 7-24 illustrate an alternative cable management system 200 that routes and manages a variety of cable diameters and gauges. The cable management system 200 includes a U-shaped bracket 230 with messenger wire latches 260 (FIG. 8), a closure bracket 300 (FIGS. 9-10), and a plurality of cable clamp halves 380 (FIGS. 11-15).

As illustrated in FIG. 8, the U-shaped bracket includes a base 232 with a top 234, a bottom 236, a front 238, a back 240, a first side 242, and a second side 244. Arms 246 extend from the first side 242 and the second side 244 of the base 232. The arms 246 include a vertical member 248 that extends to a horizontal member 250. Each arm 246 includes a slot 252 located in the center of the arm 246. The slots 252 include an enlarged entrance end 254 located in the horizontal member 250. The entrance end 254 allows for loading of the cable clamp halves 380 in the bracket 230 without manipulating the bracket 230. Each slot 252 extends from the entrance end 254 in the horizontal member 250, down the center of the vertical member 248, to a bottom 256 in the vertical member 248.

The arms 246 and the base 232 include gussets 270, 274, respectively, to provide strength and protection against natural forces or accidental damage. One gusset 270 extending from each arm includes closure bracket fastener holes 272. The gussets 270, 274 also cradle the cable clamp halves 380 keeping them contained within the U-shaped bracket 230.

Messenger wire latches 260 are located at the distal end of the horizontal member 250 of the arms 246. The messenger wire latches 260 secure messenger wires 120 for the solar application. The messenger wire latches 260 include a vertical member 262 connected to a spring hook 264. The messenger wire latches 260 provide range taking capabilities when receiving various diameter messenger wires 120. The messenger wire latches 260 provide easy attachment and reduce the amount of part numbers required for the cable management system.

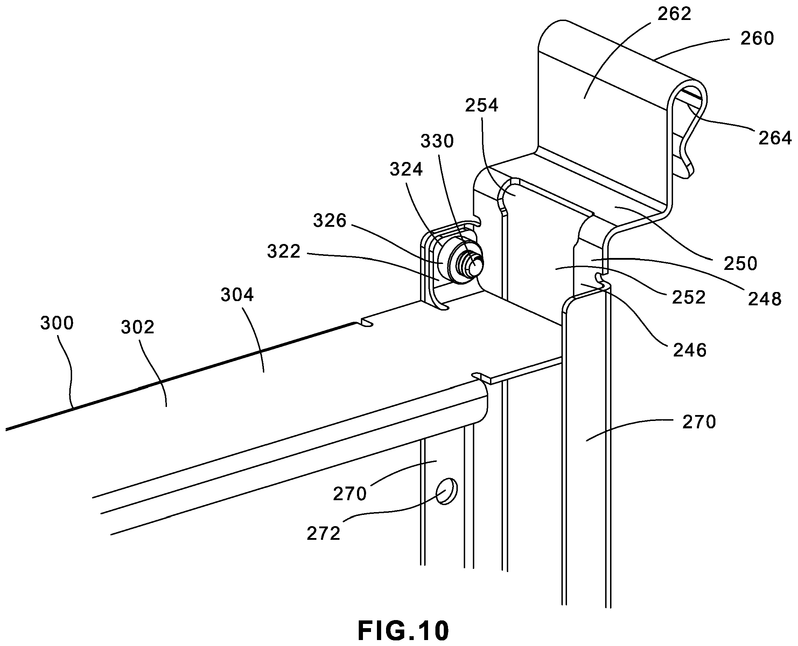

As illustrated in FIG. 7, a closure bracket 300 is installed in the U-shaped bracket 230 after the cable clamp halves 380 have been installed. As illustrated in FIGS. 7 and 9, the closure bracket 300 includes a flat member 302 that extends the length of the base 232 of the U-shaped bracket 230. The flat member 302 has a top 304, a bottom 306, a front 308, a back 310, a first side 312, and a second side 314. The closure bracket 300 includes a flange 316 extending from the front 308 and a flange 322 extending from the back 310. Each flange 316, 322 includes a hole 318, 324 with a PEM nut 320, 326 installed therein. The closure bracket 300 also includes two gussets 328 extending from the front 308 and the back 310 in a direction opposite of the flanges 316, 322. The gussets 328 provide additional strength to the U-shaped bracket. As illustrated in FIG. 10, the flanges 316, 322 of the closure bracket 300 are attached to the U-shaped bracket 230 with fasteners 330 via the PEM nuts 320, 326.

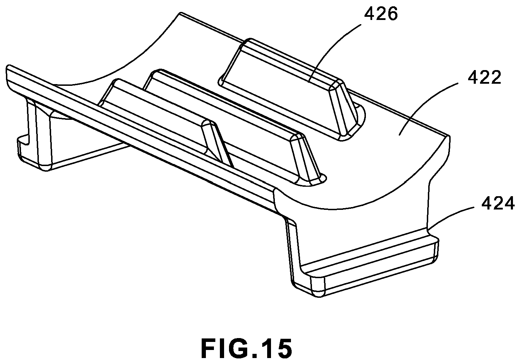

FIGS. 11-14 illustrate the cable clamp halves 380 that form the cable clamp assembly 370. Each cable clamp assembly 370 includes two cable clamp halves 380 and four range taking cushion inserts 422 (FIG. 15). Each cable clamp assembly 370 is designed to house two cables.

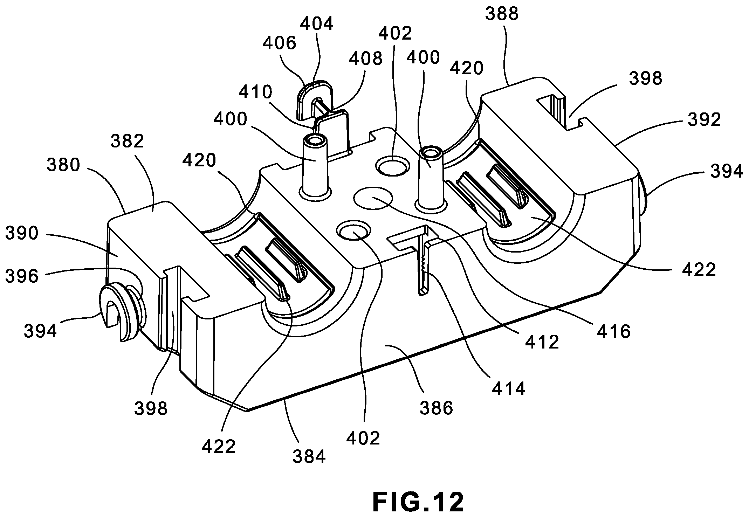

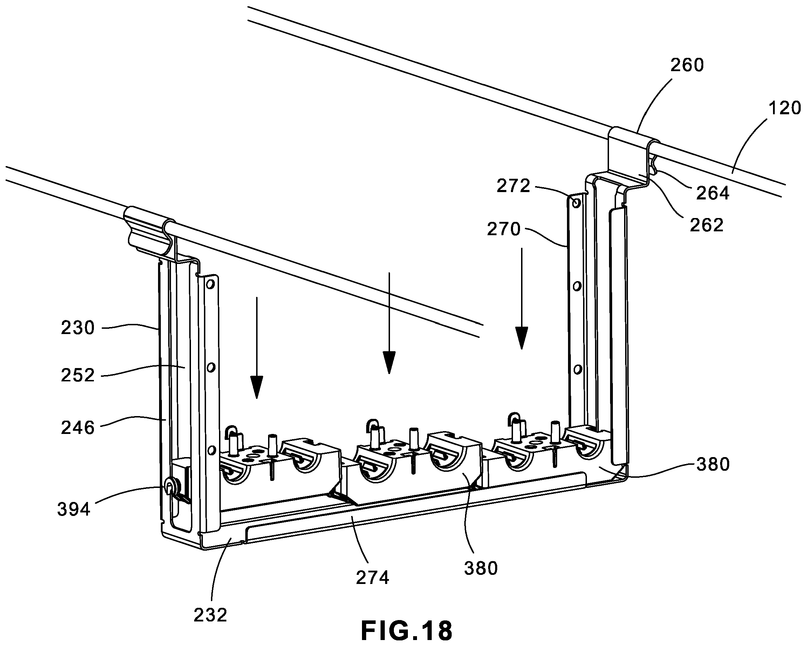

As illustrated in FIG. 12, each cable clamp half 380 includes a top 382, a bottom 384, a front 386, a back 388, a first side 390, a second side 392, and saddles 420. The first side 390 and the second side 392 of each cable clamp half 380 includes a button pad 394 and a button pad slot 398. The button pad 394 extends from the first side 390 and the second side 392 via a shaft 396. The button pad slot 398 is sized to receive a button pad 394 from an adjacent cable clamp half 380. The button pad slot 398 extends from the top 382 of the cable clamp half 380 to the bottom 384 of the cable clamp half 380. As illustrated in FIG. 18, the button pad slots 398 receive a button pad 394 when cable clamp halves 380 are installed adjacent to each other.

Each cable clamp half 380 includes two alignment bosses 400 or posts and two boss chambers 402 or holes. The alignment bosses 400 are positioned diagonally to each other and the boss chambers 402 are positioned diagonally to each other. As a result, when the cable clamp halves 380 are mounted to each other, the alignment bosses 400 of a bottom cable clamp half are housed in the boss chambers 402 of a top cable clamp half.

Each cable clamp half 380 includes a T-latch 404 on the back 388 of the cable clamp half 380 and a T-latch slot 412 on the front 386 of the cable clamp half 380. The T-latch 404 includes a release tab 406, a latch stem 408, and two latches 410. The T-latch slot 412 includes two sets of teeth 414 for providing adjustability and for enabling range taking. The center of each cable clamp half 380 has a mounting bolt hole 416 and the bottom 384 of each cable clamp half 380 includes a fastener head relief 418.

The saddles 420 of the cable clamp halves 380 receive the cushion inserts 422. As illustrated in FIG. 15, the range taking cushion inserts 422 includes two latches 424. The latches 424 connect the cushion insert 422 to the cable clamp half 380. The cushion inserts 422 also include a plurality of flexible ribs 426 for providing range variance with the cable diameters.

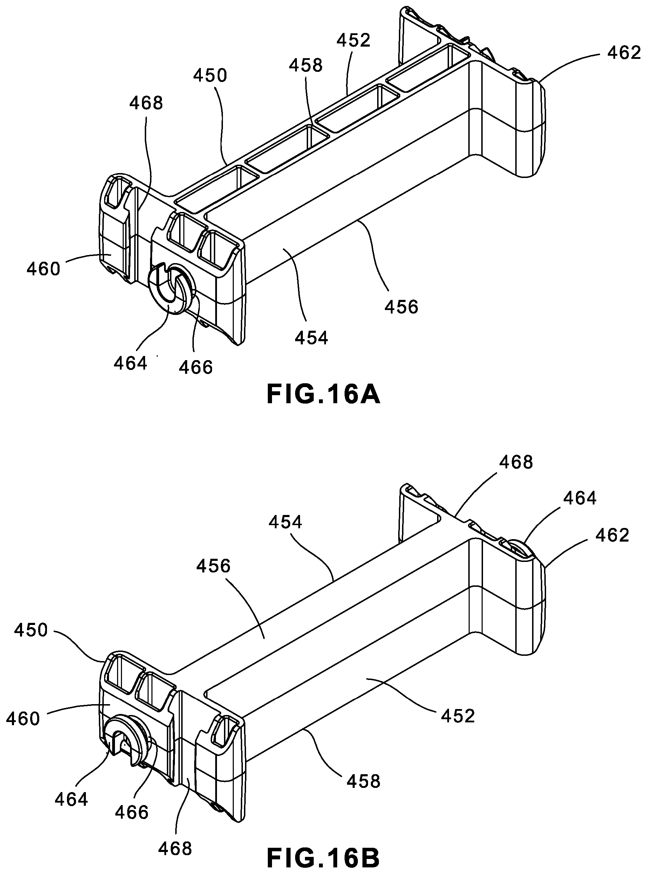

As cables are installed in the cable management system, there may be locations where cables will not be routed. A cable spacer 450 is installed in the U-shaped bracket 230 to block these locations (see FIG. 7). As illustrated in FIGS. 16A-B, the cable spacer 450 includes a front 452, a back 454, a top 456, a bottom 458, a first side 460 and a second side 462. The first side 460 and second side 462 include a button pad 464 extending from each side via shaft 466 and a button pad slot 468 extending from the top 456 to the bottom 458 of the cable spacer 450. The button pads 464 and button pad slots 468 mate with the button pads 464 and the button pads slots 468 of adjacent cable clamp halves 380 in the cable management system 370.

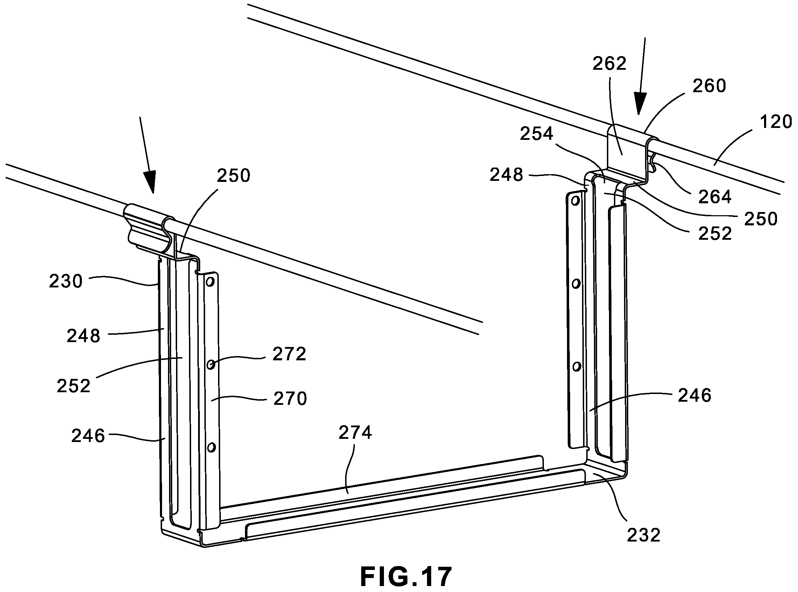

FIGS. 17-24 illustrate the installation of the cable management system. The installation begins by hanging the U-shaped bracket 230 on the messenger wires 120 via the messenger wire latches 260 on each side of the U-shaped bracket 230. The first row of bottom cable clamp halves 380 or cable spacers 450 is inserted into the U-shaped bracket 230. The button pads 394 extending from the sides of the cable clamp halves 380 are slid in the slots 252 in the arms 246 of the U-shaped bracket 230. The adjacent bottom cable clamp halves 380 are connected to each other using the button pads 394 and button pad slots 398. Once the first row of cable clamp halves 380 have been installed, the first row of cables 140 are loaded on the cushion inserts 422 of the cable clamp halves 380. The top cable clamp halves 380 are then installed in the U-shaped bracket 230 over the cables 140. Adjacent top cable clamp halves 380 are connected to each other using the button pads 394 and button pad slots 398. The top cable clamp halves are secured to the bottom cable clamp halves via the T-latch 404 and T-latch slot 412. The closure bracket 300 can be installed on the cable clamp assemblies when the U-shaped bracket 230 is 1/3 full, 2/3 full, or filled. If the number of cables to be installed is less than the number of available cable clamp openings, a cable spacer 450 will be used to fill the row. As discussed above, the cable spacer 450 is connected to adjacent cable clamp halves 380 by the button pads 464, 394 and the button pad slots 468, 398, respectively. Alternatively, the cable clamp halves 380 may be left empty. The installation process continues until all cables in the system have been routed, as desired.

The cable management system of FIGS. 7-24 provides for cable diameter compensation with range taking cushion inserts and variable cable gauges in the same row and throughout the cable clamp array. Each cable clamp half routes one circuit of two cables for AC or DC power.

The cable clamp halves are easily slid in the U-shaped bracket and secured to each other. No special tool is required. The alignment bosses provide for easy mating of the cable clamp halves and the adjusting teeth enable cable placement in the cable clamp halves. The robust design of the cable management system withstands severe weather and accidental damage.

Furthermore, while the particular preferred embodiments of the present disclosure have been shown and described, it will be obvious to those skilled in the art that changes and modifications may be made without departing from the teaching of the disclosure. The matter set forth in the foregoing description and accompanying drawings is offered by way of illustration only and not as limitation. The actual scope of the invention is intended to be defined in the following claims when viewed in their proper perspective.

## Claims

1. A cable management system (200) for supporting cables in solar applications, the cable management system comprising:
a one piece U-shaped bracket (230) having a base with two arms (246), wherein each arm includes a slot (252) extending the length of the arm; and
a plurality of cable clamp assemblies (370) configured to be positioned within the U-shaped bracket, wherein each cable clamp assembly includes a first cable clamp half (380) having a top (382), a bottom (384), a front (386), a back (388), and sides (390, 392), and a second cable clamp half (380) having a top (382), a bottom (384), a front (386), a back (388), and sides (390, 392); wherein each side of the first cable clamp half includes a button pad (394) and a button pad slot (398) and each side of the second cable clamp half includes a button pad (394) and a button pad slot (398); wherein at least one button pad is configured to slide in the slot of one of the arms to position the first cable clamp half and the second cable clamp half within the U-shaped bracket; and wherein at least one button pad is configured to be positioned in a button pad slot of an adjacent first or second cable clamp half (380);
wherein the first cable clamp half and the cable second clamp half are configured to be connected to form the cable clamp assembly.

2. The cable management system of claim 1, wherein the first cable clamp half and the second cable clamp half are configured to separate the cables installed in the U-shaped bracket.

3. The cable management system of any preceding claim, wherein the front of the first cable clamp half has a T-latch slot (412) and the back of the first cable clamp half has a T-latch (404); and wherein the front of the second cable clamp half has a T-latch slot (412) and the back of the second cable clamp half has a T-latch (404).

4. The cable management system of any preceding claim, wherein the first cable clamp half and the second cable clamp half have a plurality of saddles (420) for holding cables,
optionally wherein the saddles have compression inserts (422) with ribs (426) for receiving cables having different diameters.

5. The cable management system of any preceding claim, wherein the at least one button pad is configured to extend through the slot of one of the arms and to remain positioned adjacent an outer surface of the arm.

6. The cable management system of any preceding claim, wherein the U-shaped bracket further comprises messenger wires latches (260) for securing messenger wires (120) in solar applications, the messenger wire latches having a vertical member (262) and a spring hook (264),
optionally wherein the messenger wire latches are configured to provide range taking capabilities for receiving various diameter messenger wires.

7. The cable management system of any preceding claim, wherein each slot in the arm of the U-shaped bracket has an entrance (254) end and a bottom (256).

8. The cable management system of any preceding claim, wherein each arm of the U-shaped bracket has a vertical member (248) and a horizontal member (250).

9. The cable management system of claim 8, wherein each slot has an entrance end (254) in the horizontal member of each arm, the entrance end allows for loading of the first cable clamp half and the second cable clamp half without manipulating the U-shaped bracket.

10. The cable management system of any of claims 8 to 9, wherein at least one of:
each slot extends down a center of the vertical member of each arm of the U-shaped bracket; or
each slot extends from an entrance end (254) in the horizontal member of the arm to a bottom (256) in the vertical member of the arm.

11. The cable management system of any preceding claim, wherein the U-shaped bracket includes gussets (270, 274) extending from the arms and the base for providing strength to the U-shaped bracket.

12. The cable management system of any preceding claim, further comprising a closure bracket (300) configured to be positioned over the plurality of cable clamp assemblies.

13. The cable management system of claim 12, wherein the closure bracket is a flat member (302) with flanges (316, 322) extending in one direction and gussets (328) extending in a direction opposite the flanges,
optionally wherein the U-shaped bracket includes gussets (270, 274) extending from the arms and the base for providing strength to the U-shaped bracket; and wherein the flanges of the closure bracket are configured to be secured to the gussets extending from the arms of the U-shaped bracket.

14. The cable management system of any preceding claim, further comprising a cable spacer (450) configured to be positioned between cable clamp assemblies,
optionally wherein the cable spacer has a top (456), a bottom (458), a front (452), a back (454), and sides (460, 462); each side of the cable spacer includes a button pad (464) and a button pad slot (468); and the button pad of the cable spacer is configured to be positioned in one of the button pad slots of a first or second cable clamp half.

15. Use of the cable management system of any preceding claim in a solar application, optionally in supporting cables in the solar application.
